# FASCICULE DE BREVET EUROPEEN

(11) **EP 0 610 106 B1**
(45) Date de publication et mention de la délivrance du brevet: **04.04.2001**
(21) Numéro de dépôt: 94400061.1
(22) Date de dépôt: 11.01.1994
(51) Int. Cl.: H04Q 11/04, H04Q 3/00

(54) **Système de traitement de signalisation pour ensemble support de mode circuit d'une installation de télécommunications**
Signalierungsverarbeitungssystem für gemeinsame Unterstützung der Durchschaltebetriebsart in einer Telekommunikationsanlage
Signaling processing system for joint support of circuit mode in a telecommunications installation

(30) Priorité: 13.01.1993 FR 9300236
(43) Date de publication de la demande: 10.08.1994
(73) Titulaire: ALCATEL, 75382 Paris Cédex 08 (FR)
(72) Inventeur: Gass, Raymond, F-67150 Bolsenheim (FR); Cordonnier, Christine, F-67200 Wolfisheim (FR)
(74) Mandataire: Schaub, Bernard

(56) Documents cités:
- FR-A- 2 665 314
- US-A- 4 421 955
- ACTES DU COLLOQUE, COLLOQUE INTERNATIONAL DE COMMUTATION,7-11 MAI 1979, PAGES 1234-1239, PARIS FR J. JUNTTILA ET AL 'Application du système de commutation numérique DX 200 à differentes interfaces de signalisation'
- ACTES DU COLLOQUE, 10E COLLOQUE INTERNATIONAL DE COMMUTATION, SEPT. 1981, SESSION 21A PAPER 6 PAGES 1-6, MONTR AL CN F.H. REES ET AL 'Message Transmission in the Network of System X Exchanges'

## Description

L'invention concerne un système de traitement de la signalisation, relative aux appareils mis à disposition des usagers, pour ensemble support de mode circuit qui est constitué autour d'unités interconnectées par un réseau local de liaisons temporelles point-à-point dans une installation de télécommunications, ces unités servant notamment au rattachement des appareils mis à disposition des usagers dans l'installation, éventuellement à celui d'auxiliaires, et/ou à celui d'équipements de commande ou de traitement de l'installation.

La demande de brevet français 2665314 décrit un réseau d'interconnexion pour coeur d'installation numérique de télécommunications à intégration de services dans lequel les unités du coeur sont interconnectées par des liaisons en point-à-point qui sont spécifiquement organisées en fonction des besoins des unités reliées. Ce réseau d'interconnexion comporte un sous-réseau interconnectant les unités supports de mode circuit du coeur de l'installation, c'est-à-dire celles qui interviennent directement ou indirectement à l'occasion de la commutation temporelle synchrone, dans l'installation, d'informations successivement transférées sous forme de blocs binaires de mêmes dimensions, un bloc étant couramment constitué par un octet et la récurrence de transfert étant de 125 µs dans le cas usuel d'une commutation de circuits à 64 kbit/s.

Ceci permet le transfert d'informations structurées à 8 kHz, notamment une transmission de la parole ou de signaux audiofréquence dûment échantillonnés et codés sous forme d'octets, ainsi que la transmission de données, elles aussi présentées sous forme d'octets.

Les unités concernées sont, en particulier, celles que l'on trouve dans les installations de télécommunications, notamment celles servant au rattachement des divers appareils mis à disposition des usagers et/ou à celui d'auxiliaires associés, et celles formées d'un équipement de commande ou de traitement.

Les unités de rattachement d'appareils sont par exemple du type coupleur pour postes téléphoniques, coupleur pour appareils de télécommunications raccordables aux interfaces S0/T0 ou S2/T2 tels que définis par le CCITT, ou encore coupleur pour appareils d'usager dédiés, c'est-à-dire exploités selon un standard particulier mis en oeuvre dans l'installation considérée.

De manière connue, les appareils d'usager, tant analogiques que numériques, d'une installation se rattachent à celle-ci au niveau de coupleurs, tels qu'évoqués ci-dessus. Ces coupleurs permettent le transit des informations échangées, à la demande, par les appareils entre eux, au travers de l'installation à laquelle ces appareils sont au moins susceptibles d'être reliés, s'ils n'y sont pas directement rattachés.

De manière connue les échanges d'information entre des appareils d'usager impliquent des échanges de signalisation, notamment entre chaque appareil et le coupleur par l'intermédiaire duquel il est rattaché à l'installation.

Il en est de même lorsque ces appareils communiquent avec un auxiliaire, raccordé à un coupleur ou à un équipement de commande ou de traitement de l'installation. Les échanges de signalisation impliquant un appareil ont lieu selon un protocole spécifique qui est susceptible d'être traité par ce type de l'appareil.

A cet effet, chaque appareil comporte une logique permettant de traiter, selon un protocole donné, les informations de signalisation reçues ou à émettre, et il doit en être de même au niveau du coupleur auquel il se raccorde. Vue la grande variété des besoins en matière de communication, il existe de nombreux types d'appareils d'usager qui peuvent être amenés à coexister dans une même installation, celle-ci pouvant donc avoir à supporter la mise en oeuvre simultanée de protocoles différents.

Le document US-A-4 421 955 décrit un réseau de commutation distribué. Chaque coupleur de rattachement comporte donc des modules d'interface entrée/sortie auxquels aboutissent les liaisons de transmission le reliant à chacun des appareils d'usager qu'il dessert. Chacun de ces modules est conçu et/ou éventuellement programmé en fonction des caractéristiques de la liaison de transmission qu'il va desservir et du protocole qui va être exploité pour les échanges d'information par l'intermédiaire de cette liaison. Divers modules sont donc susceptibles d'être conjointement exploités dans les coupleurs d'une même installation, voir dans un même coupleur.

Les coupleurs comportent généralement des logiques internes qui leur permettent de traiter et/ou d'orienter les signalisations provenant des appareils d'usager qu'ils desservent, via les modules d'interface auxquels ces appareils sont reliés; ces logiques permettent aussi l'envoi de signalisations en sens inverse au travers des modules d'interface. Dans la mesure où il existe une grande variété d'appareils d'usager et en conséquence de protocoles et de modules d'interface, il est aussi nécessaire de prévoir des logiques internes de coupleur susceptibles de s'adapter aux différentes variantes envisageables, si possible de manière simple, souple et à un faible coût.

L'invention propose donc un système de traitement de signalisation relative aux appareils mis à disposition des usagers, pour ensemble support de mode circuit qui est constitué autour d'unités interconnectées par un réseau local de liaisons temporelles, point-à-point, dans une installation de télécommunications, ces unités servant notamment au rattachement des appareils mis à disposition des usagers dans l'installation, ainsi qu'éventuellement à celui d'auxiliaires, et/ou à celui d'équipements de commande ou de traitement de l'installation.

Selon une caractéristique de l'invention, chaque unité est dotée d'interfaces pour le raccordement des équipements, auxiliaires ou appareils rattachés à elle et d'un circuit de communication. Celui-ci est relié à un microprocesseur par lequel il est supervisé, à des liaisons temporelles internes qui desservent les interfaces de raccordement de l'unité, et aux liaisons temporelles point-à-point, raccordées à l'unité pour la mise en communication de ces équipements, auxiliaires ou appareils rattachés à elle, avec le microprocesseur et avec les équipements, auxiliaires ou appareils susceptibles d'être atteints par l'intermédiaire des autres unités de l'ensemble support de mode circuit. L'unité comporte des moyens pour conformer les informations de signalisation interne pour les équipements, auxiliaires ou appareils rattachés à elle, ces moyens étant localisés au moins au niveau des interfaces de raccordement, en vue de la transmission des informations de signalisation sous une forme standardisée commutable par le circuit de communication de ladite unité par l'intermédiaire duquel les dites informations de signalisation interne sont échangées, elle comporte aussi des moyens pour prétraiter les informations de signalisation interne au profit du microprocesseur de l'unité considérée ou de l'auxiliaire ou équipement chargé de les traiter dans l'ensemble.

L'invention, ses caractéristiques et ses avantages sont précisés dans la description qui suit en liaison avec les figures évoquées ci-dessous.

La figure 1 présente un schéma d'un exemple d'installation de télécommunications dont une des unités constituée par un coupleur de rattachement d'appareils d'usager est partiellement développée.

La figure 2 présente un schéma d'un coupleur de type support de mode circuit destiné à assurer le rattachement d'appareils d'usager à une installation telle qu'envisagée en figure 1.

La figure 3 présente un schéma d'interface de raccordement pour appareils, de type poste analogique.

La figure 4 présente un schéma d'agencement d'accès mémoire pour coupleur.

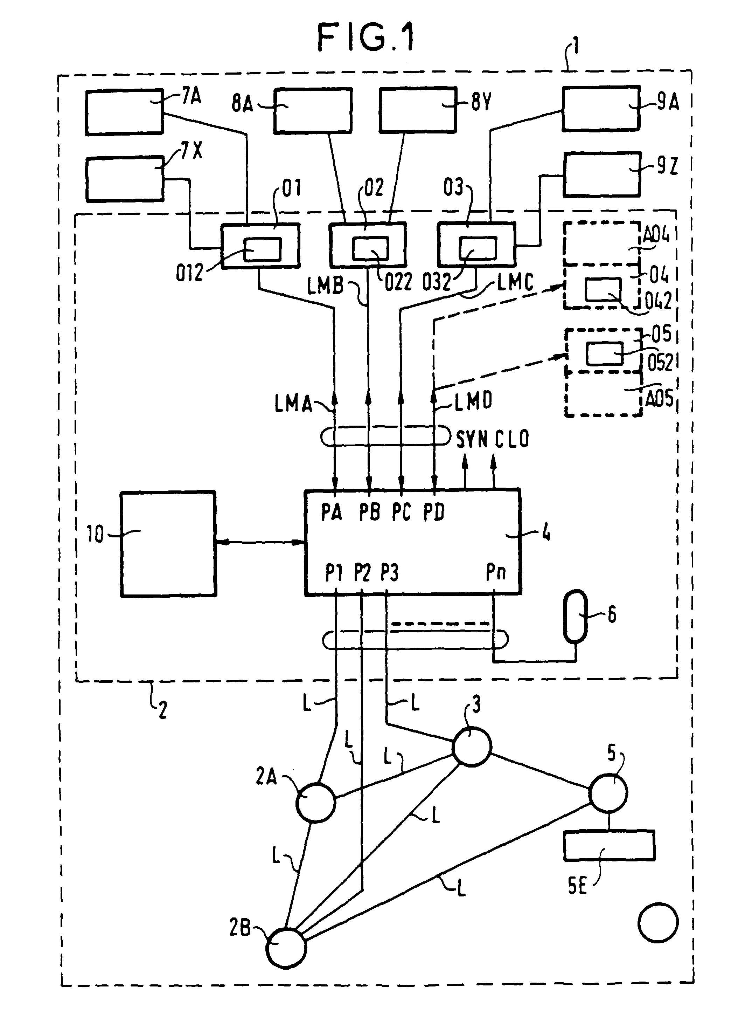

L'installation de télécommunications objet de la figure 1 est supposée de type numérique et multiservice, elle comporte un coeur 1 doté d'un réseau d'interconnexion préférablement tel que défini dans la demande de brevet français 2665314, ce réseau reliant, deux à deux, par des liaisons point-à-point et en fonction des besoins, les unités qui constituent le coeur 1.

Ces unités sont par exemple aménagées sur des cartes porteuses individuelles, non représentées, qui sont regroupées à l'intérieur d'une même structure, de type armoire ou coffret, où se situe le coeur de l'installation. Dans une forme préférée de réalisation, ces cartes porteuses communiquent entre elles par l'intermédiaire d'un réseau d'interconnexion réalisé au niveau d'une carte, dite de fond de panier, sur laquelle sont réalisées les liaisons d'interconnexion et à laquelle viennent se connecter les cartes porteuses au niveau de positions de cartes comportant des organes de connexion appropriés.

Le réseau de connexion est susceptible d'être constitué de plusieurs sous-réseaux individuellement affectés à la mise en oeuvre de services différents, l'un de ces sous-réseaux, seul envisagé ici, étant affecté à la mise en communication des unités, supports de mode circuit, du coeur de l'installation.

Parmi ces unités, supports de mode circuit, il y a généralement des coupleurs de rattachement pour les appareils destinés à être exploités par les usagers dans l'installation, ces coupleurs étant ici référencés 2, 2A et 2B, ainsi que des coupleurs d'équipements spécialisés de commande ou de traitement, tel un coupleur 3 d'équipement de commande principal et un coupleur 5 d'équipement spécialisé 5E assurant la centralisation d'un traitement par exemple de transcodage ou éventuellement de signalisation.

Les coupleurs de rattachement d'appareils sont destinés à permettre une transmission généralement bidirectionnelle d'informations entre les appareils d'usager qui leur sont rattachés et notamment d'autres appareils d'usager, compatibles, avec lesquels ils sont susceptibles d'entrer en communication par l'intermédiaire du sous-réseau support de mode circuit de l'installation qui les comporte.

Le sous-réseau comporte donc des liaisons bidirectionnelles, de type point-à-point, ici référencées L, spécifiquement adaptées aux besoins des unités qu'elles relient; ces liaisons L supportent ici des transmissions fondées sur une même structure de trame temporelle.

Cette trame commune a par exemple une période dont la durée est de 125 µs, elle est ici supposée divisée en "p" intervalles de temps égaux permettant un transfert d'informations mises sous forme numérique par "p" canaux ayant un débit unitaire de 64 kbit/s, p étant par exemple égal à 128.

Chaque unité, 2, 2A, ... , 2B, 3 ou 5 de sous-réseau, support de mode circuit, comporte un circuit de communication 4, ici supposé réalisé sous la forme d'un circuit intégré.

Chaque circuit de communication 4 permet de relier l'unité, telle 2, qui le comporte, aux autres unités du même sous-réseau par un premier faisceau de liaisons L, il permet aussi de relier cette unité, qui le comporte, par un second faisceau de liaisons LMA, ... , LMD à des interfaces de raccordement d'appareils exploités par les usagers, ou à des interfaces de raccordement d'auxiliaires, qui sont les unes et les autres rattachées à l'unité 2 considérée.

Les interfaces de raccordement d'appareils sont ici référencées 01, 02, 03. A titre d'exemple, l'interface 01 correspond à un module de ligne pour le raccordement d'appareils 7A, ... , 7X, tels que des postes analogiques d'abonné, l'interface 02 correspond à un module de ligne prévu pour le raccordement d'appareils 8A, ... , 8Y, tels que des terminaux numériques d'abonné destinés à se raccorder à un niveau S2 ou T2, selon les définitions du CCITT, et l'interface 03 correspond à un module de ligne prévu pour le raccordement d'appareils 9A, ..., 9Z, tels que des terminaux numériques d'abonné dédiés.

Deux interfaces pour auxiliaires sont ici référencées 04 et 05, elles seront définies plus loin.

Chaque interface de raccordement est susceptible de comporter des moyens spécifiques pour conformer les informations de signalisation qui transitent par son intermédiaire en fonction de la procédure de transmission mise en oeuvre par les appareils, l'auxiliaire ou l'équipement qu'elle dessert, comme il sera développé plus loin. Ces moyens spécifiques sont ici référencés de 012 à 052 pour respectivement chacune des interfaces 01 à 05.

Il est à noter qu'une même unité telle que 2, est le plus souvent amenée à être reliée à des interfaces de raccordement identiques ou similaires, si la taille de l'installation qui la comporte le permet et il doit être compris que l'organisation présentée sur la figure 1, où les différents types d'interface de raccordement d'appareil sont tous reliés à un unique circuit de communication ne correspond pas à une organisation habituelle pour une installation réelle.

Les interfaces 04 et 05 pour auxiliaires sont par exemple respectivement mises en oeuvre la première pour un générateur de tonalités A04 d'un coupleur de rattachement desservant des postes téléphoniques et la seconde pour un processeur de traitement de signal A05 d'une unité ayant à traiter des signalisations multifréquences et/ou des signaux transmis sous forme de tonalités.

Chaque circuit de communication 4 est ici placé sous le contrôle d'un microprocesseur 10 chargé de le superviser dans l'unité dont il fait partie et il comporte un circuit d'horloge lui permettant d'extraire des signaux d'horloge CLO et des signaux de synchronisation SYN, à partir de signaux qu'il reçoit, par exemple, via une des liaisons auxquelles il est raccordé et ce notamment au profit des appareils et auxiliaires rattachés à l'unité.

Dans l'exemple de réalisation envisagé, chaque circuit de communication 4 dispose d'un nombre "n" de ports P, référencés de P1 à Pn, par l'intermédiaire desquels il est susceptible d'être relié en point-à-point par "n-1" liaisons L à "n-1" circuits de communication correspondants, respectivement incorporés chacun dans une des autres unités de l'installation. Un bouclage 6 est ici montré réalisé au niveau du port Pn et par exemple sur la carte de fond de panier, il permet à l'unité 2 dotée du circuit de communication 4 de se transmettre des informations en boucle par la liaison L particulière que constitue ce bouclage.

Chaque circuit de communication 4 est aussi doté d'un nombre "q" de ports individuels, ici référencés PA, PB, PC, PD, pour autant de liaisons temporelles bidirectionnelles, qui sont individuellement référencées de LMA à LMD, et qui sont notamment prévues pour le raccordement des interfaces d'appareils et/ou d'auxiliaire à l'unité le comporte.

Ces liaisons temporelles LMA à LMD sont ici montrées au nombre de quatre, elles sont prévues pour permettre des transmissions temporelles fondées sur une même structure de trame dont la durée est de 125µs et elles offrent chacune un même nombre de canaux temporels, ici trente-deux canaux ayant chacun un débit de 64 kbit/s.

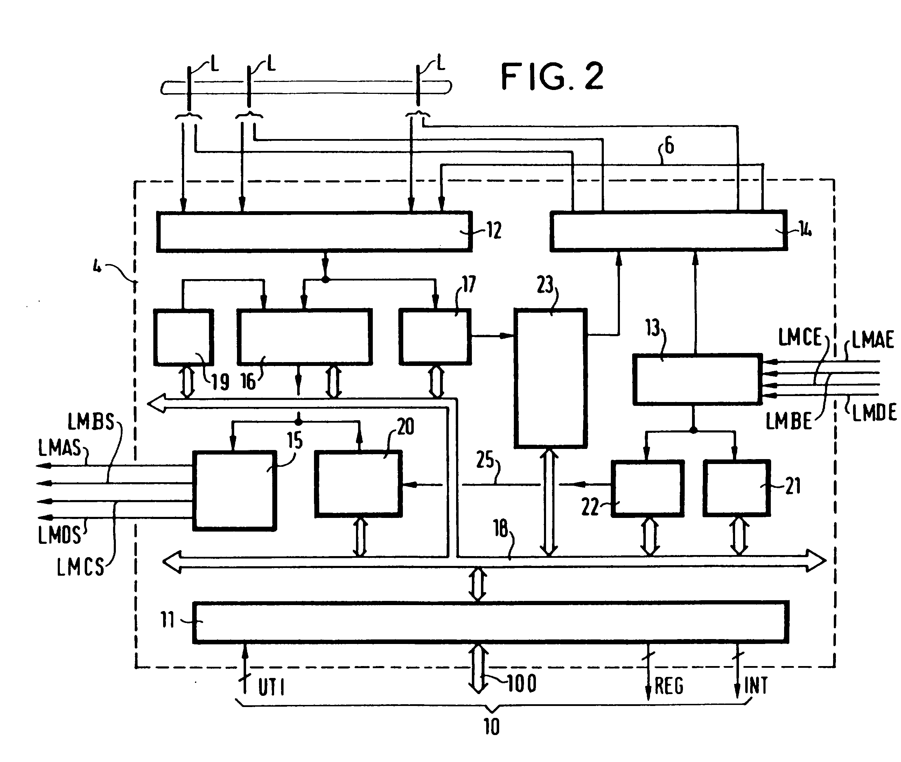

La figure 2 permet de définir plus précisément les blocs fonctionnels contenus dans un circuit de communication 4 et notamment ceux qui font partie des éléments constitutifs essentiels du système de signalisation selon l'invention.

Comme indiqué plus haut, chaque circuit de communication 4 communique avec le microprocesseur 10 chargé de sa supervision dans l'unité dont il fait partie et il comporte en conséquence une interface 11, connue en elle-même. Cette interface 11 permet la connexion du circuit de communication 4 au bus 100 du microprocesseur 10, et en particulier l'envoi d'interruptions et de demandes de transmission de données au microprocesseur 10, via des liaisons spécialisées ici référencées INT et REQ, ainsi que la réception d'ordres de sélection, d'écriture, de lecture, de remise à l'état initial, de test..., provenant du microprocesseur 10, via un ensemble de liaisons ici référencé UTI.

Chaque circuit de communication 4 dispose aussi d'une première interface d'entrée 12 qui reçoit et met en phase, de manière connue, les signaux numériques provenant du lien entrant de chacune des différentes liaisons L reliées à ce circuit. Dans la réalisation envisagée, cette interface assure aussi un multiplexage des octets provenant des liens entrants, lorsque ces derniers transmettent réellement des informations vers l'unité qui la comporte, et ce après une mise sous forme parallèle des éléments binaires reçus en série pour chacun de ces octets.

Une seconde interface d'entrée 13 est également incluse dans chaque circuit de communication 4 pour recevoir les données provenant des liens entrants LMAE à LMDE des liaisons multiplexes temporelles LMA à LMD reliées à ce circuit.

Une première interface de sortie 14 permet au circuit de communication 4, qui la comporte, de transmettre à destination des autres unités du sous-réseau support de mode circuit par l'intermédiaire des liens sortants des liaisons L reliées au circuit. Une seconde interface de sortie 15 remplit les mêmes fonctions vis-à-vis des liens sortants LMAS à LMDS des liaisons multiplexes temporelles LMA à LMD déjà considérées ci-dessus.

Un module de commutation temporelle 16 est également incorporé dans chaque circuit de communication 4, entre la première interface d'entrée 12 et la seconde interface de sortie 15, il est par exemple du type décrit dans la demande de brevet français 2673785. Sa commande est ici supposée réalisée par adressage au moyen d'une mémoire adressable par son contenu, comme connu, et ici sous le contrôle du microprocesseur 10 associé au circuit de communication 4 qui le comporte. Chaque commutation correspond à l'envoi d'un octet systématiquement obtenu par addition de deux octets préalablement stockés qui sont alors simultanément adressés, ce qui permet d'envoyer à volonté l'un des octets stockés, si l'autre est de valeur nulle, ou l'octet somme. Par ce procédé qui permet de commuter les octets d'information en transit pour une communication et éventuellement une conférence, il est aussi possible de transmettre bidirectionnellement des commandes et des signalisations. Il est également possible de comparer deux octets de provenances différentes, puisque la valeur de l'octet résultat de leur addition permet de savoir s'ils sont identiques ou non et permet de détecter l'apparition d'un octet caractéristique dans un canal temporel donné au cours d'une succession de trames temporelles; de même peut être décelé le changement de valeur d'un octet dans un canal temporel connaissant la valeur précédemment enregistrée pour ce même canal.

Dans une forme de réalisation, le nombre de canaux temporels entrants susceptibles d'être traités par le module de commutation 4 est égal à quatre mille quatre vingt seize et permet la desserte d'un faisceau de liens entrants de trente liaisons L où chaque lien comporte cent vingt huit canaux ainsi que celle de deux liens internes de même capacité en canaux, qui sont exploités par le circuit de communication lui-même. Dans cet exemple et comme indiqué par ailleurs, la seconde interface de sortie dessert quatre liens multiplex sortants LMAS à LMDS disposant chacun de trente deux canaux temporels.

La seconde interface d'entrée 13 comporte un nombre de liens multiplex entrants LMAE à LMDE et de canaux temporels par lien qui correspondent au nombre de liens multiplex sortants et au nombre de canaux temporels par lien de la seconde interface de sortie 15 évoquée ci-dessus. Elle permet le transfert des octets reçus au travers de ces différents canaux de lien entrant vers l'interface de sortie 14 à laquelle elle est directement reliée et vers le microprocesseur 10.

Les appareils ou auxiliaires susceptibles d'être rattachés à une unité se raccordent à celle-ci par une interface de rattachement 01, ... , 05 qui communique avec le circuit de communication 4 de cette unité par l'intermédiaire d'au moins l'une des liaisons multiplexes temporelles LMA, .. , LMD reliées à ce circuit.

A cet effet, ces interfaces de rattachement comportent classiquement des registres, non représentés, permettant un stockage temporaire des informations à échanger et les nécessaires synchronisations à l'émission et/ou en réception, elles sont également susceptibles de contenir des dispositifs, non représentés, permettant de conformer les informations de signalisation émanant des appareils ou auxiliaires sous une forme standardisée, interne à l'installation, qui les rend commutables par les modules de commutation temporelle 16 de l'ensemble support de mode circuit.

Dans une forme de réalisation, les octets constituent les éléments de base de toute signalisation interne transmise au travers de l'ensemble évoqué ci-dessus, toutes les informations de signalisation interne étant composées d'un ou de plusieurs octets, selon les besoins des appareils, auxiliaires ou équipements concernés.

Dans chaque cas, les échanges d'information de signalisation entre une unité et les appareils ou auxiliaires qui lui sont rattachés s'effectuent par échange de registre(s) à registre(s) entre les interfaces de raccordement 01, ..., 05 de ces appareils ou auxiliaires et les interfaces d'entrée 13 et de sortie 15 du circuit de communication 4 concerné, via les liaisons LMA à LMD qui relient ces diverses interfaces.

Les interfaces 13 et 15 du circuit de communication sont identiques, quel que soit le circuit de communication 4 considéré, puisqu'elles sont prévues pour des faisceaux de liaisons multiplexes temporelles LMA à LMD dont la constitution et l'organisation sont identiques. Dans l'exemple de réalisation envisagé, l'interface d'entrée 13 et l'interface de sortie 15 comportent chacune cent vingt huit registres leur permettant de temporairement stocker les octets reçus à chaque trame, via les liens entrants LMAE, ..., LMDE reliés à l'une, et les octets à émettre par l'intermédiaire des liens sortants LMAS, ... , LMDS reliés à l'autre.

Par contre les interfaces de raccordement 01, ... , 05 ont nécessairement des organisations adaptées aux caractéristiques des appareils ou auxiliaires qu'elles desservent pour leur raccordement à ces appareils ou auxiliaires.

Ainsi dans un premier exemple d'application, une interface de raccordement 01, pour appareil(s) de type poste analogique à numérotation décimale, comporte un ou plusieurs éléments modulaires 01A, ..., 01Z doté chacun d'un circuit d'adaptation électrique 010, auquel se raccorde la ligne de l'appareil, tel 7A, d'un codec 011 et d'un convertisseur de signalisation 012; ces deux derniers relient le circuit d'adaptation à la liaison multiplexe temporelle, telle LMA, à laquelle est raccordée l'interface 01. Un canal bidirectionnel de rang déterminé de la liaison multiplexe LMA est réservé au codec 011 pour les signaux de parole qui émanent de l'appareil 7A ou lui sont destinés. Un autre canal bidirectionnel de la liaison multiplexe LMA est réservé au convertisseur 012 pour la transmission sous forme d'octets des signalisations par changement d'état qui sont produites par l'appareil 7A ou inversement pour celles qui lui sont envoyées sous forme d'octet, ce convertisseur de signalisation 012 ayant, vis-à-vis de la signalisation, un rôle analogue à celui rempli par le codec pour les signaux de parole.

Les octets de signalisation produits par le microprocesseur 10 d'une unité 2 vers un appareil rattaché à cette unité, tel que l'appareil 7A, sont émis sur le canal temporel réservé à cet appareil sur le lien sortant, tel LMAS, de la liaison LMA à laquelle il est rattaché par son interface 01. A cet effet, le microprocesseur 10 vient actionner un automate d'émission d'octets 19 relié à lui par le bus 100, dans le circuit de communication 4 associé, cet automate étant structuré pour faire produire, à la demande, les divers octets de signalisation qui sont traduits par des commandes d'état déterminées par les convertisseurs de signalisation qui les reçoivent.

Dans la mesure où chacun des octets de signalisation susceptible d'être produit par une unité, telle que 2, correspond à une combinaison particulière de huit bits, il est possible de faire produire successivement les diverses combinaisons par un compteur connecté en entrée de module de commutation 16, ce dernier permettant de les commuter à la demande et le moment venu vers les canaux temporels sortants choisis. Dans la réalisation envisagée, cette émission est réalisée à l'aide de deux compteurs, non représentés, qui accèdent au module de commutation 16 au niveau de liaisons multiplexes temporelles point-à-point L du bouclage 6 entre interfaces 14 et 12.

L'envoi d'un octet de signalisation spécifique vers un appareil sur un canal temporel sortant donné s'obtient donc par commutation d'un octet produit par un des compteurs d'émission à un instant déterminé et positionné en conséquence dans un canal temporel entrant déterminé d'une liaison L , vers un canal temporel sortant d'une liaison multiplexe temporelle, telle LMA, par le module de commutation 16, sous l'action de l'automate d'émission 19 dûment programmé à cet effet.

En sens inverse, le microprocesseur 10 est susceptible d'être informé par un automate de traitement d'octets isolés entrants 21 de tout changement intervenant sur les canaux temporels des liaisons temporelles entrantes LMAE, ... , LMDE qui sont affectés à la transmission de la signalisation pour les appareils à signalisation par changement d'état.

Cet automate de traitement d'octets isolés entrants 21 est organisé de manière connue en elle-même pour surveiller les canaux temporels chargés de transmettre de telles signalisations. Cette surveillance s'effectue par exemple par comparaison systématique de tout octet reçu par un des canaux soumis à surveillance avec l'octet précédemment reçu par ce même canal, sachant que chaque nouvel octet transmis par un canal vient temporairement se mémoriser dans un registre affecté à ce canal dans l'interface d'entrée 13 avant d'être lui-même remplacé par l'octet qui est transmis après lui par le même canal.

L'apparition d'un changement dans un canal surveillé conduit l'automate de traitement d'octets isolés entrants 21 à agir en fonction du ou des états antérieurs relativement pris en compte pour ce canal et de la programmation correspondante choisie pour le régir dans ces conditions, cette programmation pouvant varier dynamiquement en fonction des besoins, par exemple sous le contrôle du microprocesseur 10 associé et éventuellement d'une unité de commande de l'installation.

Ainsi, l'automate de traitement d'octets isolés entrants 21 est susceptible de déclencher l'envoi d'une interruption INT à destination du microprocesseur 10 associé à lui, lorsque la comparaison effectuée pour un canal temporel de signalisation donné indique une changement ou si la valeur de l'octet reçu correspond à une valeur programmée à l'avance et mémorisée en conséquence, préférablement au niveau de l'interface d'entrée 13.

Le microprocesseur 10 auquel l'automate de traitement d'octets isolés entrants 21 est relié, via le bus 100, est alors informé du changement intervenu ou de l'arrivée de l'octet de signalisation attendu, une interruption étant envoyée par cet automate au microprocesseur, à cet effet.

De telles attentes de signalisation d'événements attendus ou d'occurrences aléatoires pour les appareils sont alors supervisées par l'automate de traitement d'octets isolés entrants 21 dynamiquement programmé à cet effet, selon les besoins réels. La conservation temporaire au niveau de l'interface d'entrée 13 des octets de signalisation parvenus par des canaux temporels entrants permet aussi à l'automate de traitement d'octets isolés entrants 21 de tenir compte des événements transitoires. Dans une forme préférée de réalisation, le circuit de communication 4 et plus particulièrement son interface d'entrée 13 sont agencés pour permettre l'éventuelle supervision de tous les canaux temporels de toutes les liaisons temporelles entrantes LMAE, ... , LMDE reliées au circuit.

Un autre exemple d'application prévoit un prétraitement différent des signalisations, lorsqu'au moins certains des appareils considérés sont des postes analogiques susceptibles de transmettre des signalisations en mode multifréquence notamment en phase de numérotation d'appel, de telles signalisations n'étant normalement pas susceptibles d'être pris en compte par les dispositifs évoqués ci-dessus.

Il est alors prévu de transmettre à un processeur de traitement de signal spécialisé les octets transmis par un canal susceptible de transmettre de la signalisation sous une telle forme. Dans le système selon l'invention, un tel processeur de traitement de signal constitue éventuellement un auxiliaire tel 05 en figure 1, ou fait alternativement partie d'un équipement centralisateur, tel 5E supposé desservi par le coupleur 5, ce dernier étant relié par une liaison temporelle point-à-point L à l'unité 2 dans l'installation ici considérée.

Le microprocesseur 10 commande la commutation, par le module de commutation 16, des octets reçus du canal entrant concerné de la liaison multiplexe temporelle, telle LMAE, à laquelle est relié l'appareil exploitant cette signalisation, de manière à orienter ces octets. Suivant le cas, cette orientation s'effectue soit vers un canal sortant de la liaison multiplexe temporelle, telle ici LMD, qui dessert l'auxiliaire 05, soit vers un canal sortant de la liaison temporelle point-à-point L desservant le coupleur 5 de l'équipement centralisateur 5E, alors supposé prévu pour traiter les signalisations en mode multifréquence. L'information multifréquence traitée, soit par l'auxiliaire 05, soit par l'équipement centralisateur, est alors transcodée sous forme d'octets codés, de manière à être exploitable par l'organe destiné à la prendre en compte, cet organe étant par exemple le microprocesseur 10 de l'unité 2 d'où provient l'information multifréquence considérée.

Les octets obtenus par transcodage sont alors envoyés à l'unité 2 via la liaison LMD ou via la liaison L, suivant le cas. Lorsque des octets de signalisation parviennent au circuit de communication 4 par l'une des liaisons multiplexes temporelles LMAE, ... , LMDE, ils sont normalement pris en compte par l'automate de traitement d'octets isolés entrants 21 qui agit comme précédemment vis-à-vis du microprocesseur 10 en ne l'informant que des événements significatifs pour lesquels son intervention est requise.

Il est également possible au microprocesseur 10 de communiquer avec un auxiliaire, tel que 04 ou 05, ou un équipement centralisateur, tel que 5E, par les liaisons multiplexes qui les unissent. Ceci permet au microprocesseur 10 de faire effectuer un traitement spécifique par un auxiliaire, ce traitement est par exemple la recherche d'informations de signalisation transcodées dans un code particulier, par exemple en code R2 ou en code Q23, dans un canal temporel donné de réception.

Le traitement de la signalisation échangée entre des appareils de type numérique et leur unité de rattachement 2, par l'intermédiaire de l'interface de raccordement 02 ou 03 à laquelle ils sont raccordés, est facilité par le fait que les informations de signalisation y sont numérisées sous une forme directement transmissible sous forme d'octet et que si nécessaire, une adaptation de débit est réalisée par un agencement adaptateur approprié, symbolisé par 022, 032 pour les appareils sur la figure 1 et par 042 et 052 pour les auxiliaires 04 et 05.

Ces informations de signalisation sont transmises d'une manière pleinement codifiée, lorsque les appareils, tels 8A, ... , 8Y, dits RNIS, sont prévus pour être raccordés à un niveau standard tel que défini par une autorité normalisatrice, tel le CCITT pour les réseaux numériques à intégration de service. Dans le cas des appareils RNIS destinés à être raccordés à un niveau d'accès de base S2/T2, les liaisons multiplexes temporelles LMA, ... , LMD qui relient l'interface de raccordement 02 de ces appareils RNIS au circuit de communication 4 associé à cette interface, ont une structure de trame normalisée usuelle selon laquelle les canaux temporels correspondant aux intervalles de temps de rang 1 à 15 et 17 à 31 sont affectés au transfert des octets d'information, le canal temporel correspondant à l'intervalle de temps de rang 16 étant affecté au transfert des octets de signalisation afférents aux canaux de transfert d'information évoqués ci-dessus.

Dans le cas d'appareils numériques tels 9A, ... ,9Z, correspondant à des terminaux dédiés, il est par exemple prévu d'affecter quatre canaux temporels par appareil, dans les deux directions inverses de transmission, sur chacune des liaisons multiplexes temporelles LMA, ... , LMD reliant l'interface de raccordement 03, qui les dessert, au circuit de communication 4 de l'unité 2 à laquelle ces appareils sont rattachés.

Chaque appareil dispose ici de deux canaux B1 et B2 pour les transferts d'information, d'un canal D et d'un canal supplémentaire S pour le transfert de données de signalisation interne, et ce bidirectionnellement sur l'une des liaisons LMA, ... , LMD qui desservent l'interface de raccordement 03 auquel l'appareil considéré est relié.

Une organisation appropriée, non représentée, des canaux temporels desservant les diverses interfaces 01, 02, 03, possibles pour la desserte des divers appareils, permet d'affecter, dans la mesure du possible les canaux temporels de même rang des liaisons LMA, ... , LMD à des fonctions identiques ou similaires, pour des interfaces différentes. Ceci est appliqué par exemple au canal temporel de rang 16 qui est systématiquement affecté au transfert de signalisation quelle que soit l'interface desservie, ainsi que partiellement au canal de rang 0 usuellement affecté au transfert d'un octet de synchronisation lorsque l'interface dessert des appareils de type RNIS et alternativement affecté ici à des transferts d'octets de signalisation, pour les interfaces desservant les autres appareils.

Dans le cas des appareils 9A à 9Z, de type terminaux numériques dédiés envisagés ici, il est prévu une procédure particulière d'échange, sous forme message, pour la signalisation à l'intérieur de l'installation, cette procédure concernant tout l'ensemble support de mode circuit.

Ces messages de signalisation sont par exemple ceux nécessaires à l'affichage d'informations, notamment sous forme alphanumérique, sur un écran d'appareil, un tel message de signalisation étant susceptible de provenir d'une des unités de l'installation, dans le cas de messages standards d'exploitation, ou d'un autre appareil, dans le cas de messages individualisés.

A cet effet il est prévu que le transfert d'un tel message de signalisation soit nécessairement précédé d'une requête émise par l'envoyeur potentiel sur le canal S vers le receveur potentiel, le transfert de tout ou partie du message n'étant initié par l'envoyeur qu'après réception d'un acquiescement envoyé en sens inverse, via le canal temporel S de sens inverse correspondant, par le receveur, lorsque ce dernier est prêt à recevoir.

A cet effet, le circuit de communication 4 d'une unité est doté d'un automate, dit de traitement de messages entrants, - voir figure 2 - qui est associé à l'interface d'entrée 13 pour superviser les liens entrants des liaisons multiplexes temporelles LMA, ... , LMD raccordées à l'unité, de manière à détecter les requêtes émises par les appareils 9A, ... , 9Z concernés, à des fins de transmission de message.

Chaque appareil exploite alors le canal S qui lui est individuellement affecté sur l'un des liens entrants.

Ce canal S correspond par exemple au canal temporel de rang 0 sur le lien LMAE pour le premier appareil relié à l'interface de raccordement 03. Il est connu que ce canal est réservé aux octets de synchronisation, non transmis au travers de l'unité, dans le cas d'un lien entrant LMAE provenant d'une interface de raccordement 02 pour terminaux RNIS, cette interface 02 étant alors supposée reliée à un circuit de communication 4 d'une unité différente.

Chaque message, à base d'octets, comporte un en-tête suivi par un certain nombre d'octets constituant les informations du message à transmettre, un message se termine par une somme de contrôle déterminée à partir des octets d'information du message par l'émetteur.

L'automate de traitement des messages entrants 22 assure la détection des requêtes émises par les appareils auxquels des canaux S sont affectés sur les liaisons LMA, ... , LMS reliant l'interface de raccordement 03 à laquelle ils sont raccordés au circuit de communication 4 de l'unité à laquelle ils sont rattachés.

Ces requêtes se traduisent par une configuration déterminée de bits dont l'apparition est prise en compte par l'automate de traitement des messages entrants 22 qui déclenche l'envoi d'une interruption INT au microprocesseur 10 de l'unité contenant cet automate. Chaque interruption est prise en compte par le microprocesseur 10 en fonction de ses disponibilités en matière de réception d'informations et notamment en tenant compte des requêtes éventuellement formulées par ailleurs, notamment par les autres unités de l'installation. L'envoi d'un acquiescement est demandé par le microprocesseur 10 à un automate 20 de traitement des messages sortants raccordé, d'une part, au bus 100 du microprocesseur, d'autre part, à l'interface de sortie 15 du circuit de communication 4 qui est associée à ce microprocesseur et qui contient l'automate de traitement des messages sortants 20.

L'envoi d'un acquiescement à un appareil se traduit par l'émission d'une configuration de bits particulière, différente de celle correspondant à une requête, cet envoi est effectué sur le canal temporel sortant S réservé à cet appareil dans la liaison multiplexe temporelle le reliant au circuit de communication 4 considéré.

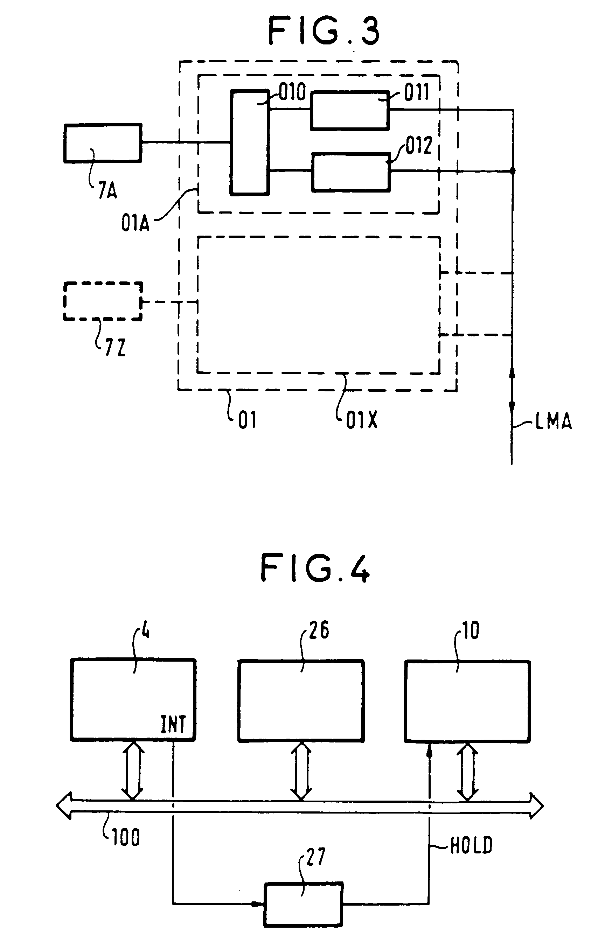

La réception d'un acquiescement par un appareil sur le canal S sortant du circuit de communication 4 auquel il est relié, entraîne l'émission du message correspondant par cet appareil sur le canal S, entrant, dans ce circuit de communication 4, qui lui est réservé, la réception de ce message est supervisée par l'automate de traitement des messages entrants 22 qui assure un stockage des octets constituant le message dans une mémoire 26 - voir figure 4 - et un contrôle de bonne réception du message au profit du microprocesseur 10.

Dans la réalisation envisagée, la mémoire 26, où s'enregistrent de tels messages, est celle qui est associée au microprocesseur 10 pour ses besoins, elle est donc reliée au bus 100 auquel sont raccordés le microprocesseur et le circuit de communication 4 associé. Un contrôleur 27 d'accès direct en mémoire assure la répartition des temps d'accès en mémoire au microprocesseur 10 et au circuit de communication 4, comme connu par ailleurs.

L'automate de traitement des messages entrants 22 assure le rangement en mémoire 26 du message reçu d'un appareil et il déclenche l'envoi d'une interruption au microprocesseur 10, lorsque les octets constituant le message ont tous été reçus, le nombre de ces octets étant en fait indiqué dans l'en-tête que comporte ce message. L'automate de traitement des messages entrants 22 signale alors au microprocesseur 10 qu'il a reçu le message annoncé, il indique l'emplacement où sont stockés les octets de message dans la mémoire 26 et il précise si le contrôle de bonne transmission qu'il a effectué sur le message correspond ou non à l'information constituée par la somme de contrôle transmise à la fin de ce message.

Le message stocké en mémoire 26 est pris en compte par le microprocesseur 10 soit à des fins d'exploitation, s'il lui est destiné, soit en vue de sa transmission à un autre appareil, ou auxiliaire qui est rattaché à l'unité qui comporte la mémoire 26 considérée et auquel ce message est destiné, soit encore en vue de sa transmission à un autre appareil , auxiliaire ou équipement, via une des autres unités de l'installation.

Dans le premier cas où un message enregistré en mémoire 26 est destiné à être transmis à un appareil ou auxiliaire rattaché à l'unité comportant la mémoire 26, cette transmission va s'effectuer via les liens multiplexes temporels sortants LMAS, ... , LMDS raccordés au circuit de communication 4 de cette unité et elle est supervisée par l'automate de traitement des messages sortants 20. Ce dernier est alors actionné par le microprocesseur 10 qui lui fait déclencher l'envoi d'une requête à destination de l'appareil, ou auxiliaire, destinataire d'un message, sur le canal sortant S réservé à cet appareil. Celui-ci répond par l'intermédiaire du canal entrant S qui lui est aussi réservé et l'acquiescement, transmis à cet effet, est pris en compte par l'automate de traitement des messages 22 associé. L'automate de traitement des messages sortants 20 est aussitôt informé de cette arrivée d'acquiescement, via la liaison directe 25 qui le relie à son associé et il déclenche les opérations nécessaire au transfert du message vers l'appareil auquel il est destiné, via l'interface de sortie 15 et le canal sortant S réservé à cet appareil.

Ces opérations conduisent à la transmission octet par octet d'un message dont la constitution correspond à celle décrite plus haut pour les messages transmis des appareils vers l'unité à laquelle ils sont rattachés, les octets de message étant récupérés, sous l'action de l'automate de traitement de messages sortants 20, dans la mémoire 25, où ils étaient jusqu'alors stockés.

Comme indiqué plus haut, un message de signalisation produit par un appareil, ou auxiliaire, rattaché à une unité est aussi susceptible d'être transmis à un appareil, auxiliaire ou équipement rattaché à une autre unité de l'installation ou desservi au travers d'une telle autre unité.

Un tel message est alors mis en mémoire 26 de l'unité à laquelle il a été initialement envoyé par son émetteur, selon le processus évoqué ci-dessus, étant entendu que ce message se différencie des messages précédemment envisagés par l'adresse interne de destination inscrite dans l'en-tête ayant servi à sa transmission vers l'unité où se situe la mémoire 26 considérée.

L'envoi vers l'unité de l'installation qui est localement destinataire s'effectue sous le contrôle d'un automate 23 de traitement en sortie sur liaison point-à-point L qui commande l'extraction des octets du message alors stockés dans la mémoire 26 de l'unité émettrice, et qui assure leur conditionnement dans les formes permettant leur transmission par la liaison L unissant les deux unités concernées, ceci qui ne constitue pas l'objet de l'invention n'étant, en conséquence, pas détaillé plus avant. Comme montré sur la figure 2, l'automate de traitement 23 d'un circuit de communication 4 est relié au bus 100 desservant le microprocesseur 10 associé à ce circuit dans l'unité qui les comporte et à l'interface 14 de sortie sur liaisons point-à-point L de ce circuit de communication 4.

De même pour les transmissions de message de signalisation, en sens inverse d'une unité vers une autre, il est prévu un automate 17 de traitement en entrée sur liaison point-à-point L dans chaque circuit de communication 4. Cet automate 17 est relié à l'interface d'entrée à laquelle sont raccordées toutes les liaisons L accédant au circuit de communication considéré et au bus 100 reliant ce dernier au microprocesseur 10 et à la mémoire 26 auxquels il est associé dans l'unité qui les comporte.

L'automate de traitement en entrée 17 d'un circuit de communication assure le transfert des messages de signalisation éventuellement reçus dans par l'intermédiaire des liaisons L vers la mémoire du microprocesseur 10 associé au circuit considéré après en avoir assuré le déconditionnement par une suite d'opérations qui peuvent être considérées comme inverses de celles réalisées par l'automate de traitement en sortie 23, ces opérations n'étant pas décrites ici dans la mesure où elles ne concernent pas directement l'objet de la présente invention.

## Revendications

1. Système de traitement de la signalisation, relative aux appareils (7A, 7X, 8A, 8Y, 9A, 9Z ) mis à disposition des usagers, pour ensemble du coeur d'une installation de télécommunications qui est constitué autour d'unités (2, 3, 5) supports de mode circuit interconnectées par un réseau local de liaisons temporelles point-à-point (L), ces unités servant au rattachement des appareils mis à disposition des usagers dans l'installation, éventuellement à celui d'auxiliaires (A04, A05), et/ou à celui d'équipements (5E) de commande ou de traitement, caractérisé en ce que chaque unité qui est dotée d'interfaces (01 à 05) pour le raccordement des équipements, auxiliaires ou appareils rattachés à elle et d'un circuit de communication (4) qui est supervisé par un microprocesseur (10) et qui est relié à ce dernier ainsi qu'à des liaisons multiplexes temporelles internes (LMA à LMS), desservant les interfaces de raccordement de l'unité, et aux liaisons temporelles point-à-point, raccordées à cette unité, pour la mise en communication de ces équipements, auxiliaires ou appareils rattachés à elle, avec le microprocesseur et avec les équipements, auxiliaires ou appareils susceptibles d'être atteints par l'intermédiaire des autres unités de l'ensemble support de mode circuit, comporte des moyens pour conformer les informations de signalisation (012 à 052) pour les équipements, auxiliaires ou appareils rattachés, cela au moins au niveau des interfaces de raccordement, en vue de la transmission de ces informations de signalisation en interne sous une forme standardisée commutable par le circuit de communication de ladite unité par l'intermédiaire duquel les dites informations de signalisation sont échangées, des moyens (19, 20, 21, 22) pour prétraiter des informations de signalisation au profit du microprocesseur de l'unité considérée ou de l'auxiliaire ou équipement chargé de les traiter dans l'ensemble.

2. Système de traitement de signalisation, selon la revendication 1, caractérisé en ce que le circuit de communication (4) de chaque unité (2, 2A, 2B, 3, 4), support de mode circuit, assure la communication de l'ensemble des informations de signalisation émises vers et/ou à partir des appareils (7A, 8A, 9A, ... , 7X, 8Y, 9Z), auxiliaires (04, 05)ou équipement(s) rattachés à elle, en mode support de circuit, à partir ou vers le microprocesseur (10) associé à ce circuit de communication dans l'unité considérée et/ou vers les autres unités, supports de mode circuit de l'installation.

3. Système de traitement de signalisation, selon la revendication 2, caractérisé en ce que chaque circuit de communication (4) d'une unité (2) comporte des moyens de prétraitement de signalisation, de type par octets, associant un automate d'émission d'octets (19) à au moins un compteur générateur d'octets relié au module de commutation (16) du circuit pour commuter à l'instigation du microprocesseur (10), associé à ce circuit de communication, des octets de signalisation produits par le(s) compteur(s) vers des canaux temporels sortants des liaisons multiplexes temporelles (LMA, ... , LMS) de rattachement d'appareils (7A, ..., 7X) et/ou auxiliaires à l'unité qui sont raccordées à ce circuit.

4. Système de traitement de signalisation, selon la revendication 2, caractérisé en ce que chaque circuit de communication (4) d'une unité (2) comporte des moyens de prétraitement de signalisation, de type par octets, associant un automate de traitement d'octets isolés entrants (21) à des comparateurs pour la supervision des octets de signalisation transmis par des canaux temporels des liaisons temporelles entrantes (LMAE, ... , LMDE) de rattachement d'appareils (7A, ..., 7X) et/ou auxiliaires à l'unité, pour informer le microprocesseur (10) associé au circuit de commutation dans cette unité, des variations significatives d'octets de signalisation dans les canaux temporels entrants supervisés.

5. Système de traitement de signalisation, selon la revendication 2, caractérisé en ce que chaque circuit de communication (4) d'une unité (2) comporte des moyens de prétraitement de signalisation, de type par messages, incluant un automate (20) de traitement de messages sortants de signalisation pour pouvoir émettre à la demande sur des canaux temporels sortants (S) des liaisons multiplexes temporelles (LMA, ... , LMS) de rattachement d'appareils (7A, ..., 7X) et/ou auxiliaires, des octets de message préalablement stockés dans l'unité, sous la supervision du microprocesseur (10) associé au circuit de communication considéré, en mettant en oeuvre une procédure de transmission de message déterminée prise en compte par ledit automate de traitement de messages sortants.

6. Système de traitement de signalisation, selon la revendication 5, caractérisé en ce que les octets de message de signalisation émis sous l'action d'un automate de traitement de messages sortants de signalisation(20) sont stockés dans une mémoire (26) à laquelle accède le microprocesseur (10) de l'unité, comportant cet automate, pour ses traitements.

7. Système de traitement de signalisation, selon la revendication 2, caractérisé en ce que chaque circuit de communication (4) d'une unité (2) comporte des moyens de prétraitement de signalisation, de type par messages, incluant un automate (22) de traitement de messages de entrants de signalisation, pour traiter, à la demande et en accord avec une procédure de transmission déterminée, des octets de message reçus par l'intermédiaire de canaux temporels entrants déterminés (S) des liaisons multiplexes temporelles (LMA, ... , LMS) de rattachement d'appareils (7A, ..., 7X) et/ou auxiliaires et pour enregistrer ces messages dans une mémoire (26) directement accessible par l'intermédiaire de cet automate et par le microprocesseur (10) associé au circuit de communication qui le comporte.

8. Système de traitement de signalisation, selon la revendication 1, caractérisé en ce qu'il comporte des moyens (012) au niveau d'interfaces (01) de raccordement d'appareils pour d'une part récupérer les signalisations analogiques d'appareil et les transmettre sous forme d'octets par un canal temporel attribué à l'appareil qui est différent du canal temporel attribué à cet appareil pour la transmission des autres informations qu'il émet, ces deux canaux étant choisis sur le lien entrant (LMCE) de la liaison multiplexe temporelle (LMC) reliant l'interface de raccordement considérée au circuit de communication 4 qui la dessert et d'autre part convertir en signaux analogiques, compatibles avec l'appareil desservi, les octets de signalisation parvenant par un canal temporel du lien (LMCS) de sens inverse de la liaison multiplexe temporelle (LMC)

## Claims

1. System for processing signalling relating to user equipments (7A, 7X, 8A, 8Y, 9A, 9Z) for the core system of a telecommunication installation constructed around circuit mode units (2, 3, 5) interconnected by a local area network of point-to-point time-division circuits (L), said units connecting user equipments in the installation, optionally auxiliary units (A04, A05) and/or control or processing equipments (5E), characterized in that each unit which has interfaces (01 to 05) for connecting user equipments, auxiliary units or control or processing equipments connected to it and a communication circuit (4) supervised by a microprocessor (10) and connected to the latter and to internal time-division multiplex circuits (LMA through LMS) serving the interfaces of the unit and to point-to-point time-division circuits connected to the unit for communications between said user equipments, auxiliary units or control or processing equipments connected to it, with the microprocessor and with the user equipments, auxiliary units or control or processing equipments accessible via other units of the circuit mode system, comprises means for adapting the signalling information (012 through 052) for the user equipments, auxiliary units or control or processing equipments connected at least to the interfaces for transmission of said signalling information internally in a standardized form which can be switched by the communication circuit of said unit by means of which said signalling information is exchanged, and means (19, 20, 21, 22) for preprocessing signalling information to the benefit of the microprocessor of the unit in question or of the auxiliary unit or the control or processing equipment responsible for processing it in the system.

2. Signalling processing system according to claim 1 characterized in that the communication circuit (4) of each circuit mode unit (2, 2A, 2B, 3, 4) handles the communication of all signalling information sent to and/or from user equipments (7A, 8A, 9A, .., 7X, 8Y, 9Z), auxiliary units (04, 05) or control or processing equipments connected to it in circuit mode from or to the microprocessor (10) associated with said communication circuit in the unit in question and/or to other circuit mode units of the installation.

3. Signalling processing system according to claim 2 characterized in that each communication circuit (4) of a unit (2) includes means for preprocessing byte type signalling combining a byte sender (19) with at least one byte generator counter connected to the switching module (16) of the circuit to switch at the instigation of the microprocessor (10) associated with said communication circuit signalling bytes produced by the counter or counters to outgoing time-division channels of time-division multiplex circuits (LMA, ..., LMS) connecting user equipments (7A, ..., 7X) and/or auxiliary units to the unit which are connected to said circuit.

4. Signalling processing system according to claim 2 characterized in that each communication circuit (4) of a unit (2) includes means for preprocessing byte type signalling combining an isolated incoming byte processor (21) with comparators for monitoring signalling bytes transmitted by time-division channels of incoming time-division circuits (LMAE, ..., LMDE) connecting user equipments (7A, ..., 7X) and/or auxiliary units to the unit, in order to advise the microprocessor (10) associated with the switching circuit in said unit of significant variations of signalling bytes in the monitored incoming time-division channels.

5. Signalling processing system according to claim 2 characterized in that each communication circuit (4) of a unit (2) comprises means for preprocessing message type signalling including an outgoing signalling message processor (20) for sending on demand on outgoing time-division channels (5) of time-division multiplex circuits (LMA, ..., LMS) connecting user equipments (7A, ..., 7X) and/or auxiliary units message bytes previously stored in the unit, under the supervision of the microprocessor (10) associated with the communication circuit concerned, using a particular message transmission protocol employed by said outgoing message processor.

6. Signalling processing system according to claim 5 characterized in that the signalling message bytes sent at the instigation of an outgoing signalling message processor (20) are stored in a memory (26) to which the microprocessor (10) of the unit including said processor has access for carrying out said processing.

7. Signalling processing system according to claim 2 characterized in that each communication circuit (4) of a unit (2) includes means for preprocessing message type signalling including an incoming signalling message processor (22) for processing on demand and using a specific transmission protocol message, bytes received on particular incoming time-division channels (5) of time-division multiplex circuits (LMA, ..., LMS) connecting user equipments (7A, ..., 7X) and/or auxiliary units and for storing said messages in a memory (26) directly accessible by means of said processor and the microprocessor (10) associated with the communication circuit including it.

8. Signalling processing system according to claim 1 characterized in that it comprises means (012) at the level of the interfaces (01) for connecting user equipments for recovering user equipment analogue signalling and transmitting it in byte form on a time-division channel assigned to the user equipment which is not the time-division channel assigned to the user equipment for transmission of other information that it sends, said two channels being chosen on the incoming circuit (LMCE) of the time-division multiplex circuit (LMC) connecting the interface in question to the communication circuit 4 which serves it, and for converting into analogue signals compatible with the user equipment served the signalling bytes incoming on a time-division channel of the opposite direction circuit (LMCS) of the time-division multiplex circuit (LMC).

## Patentansprüche

1. System zur Verarbeitung der Signalisierung bezüglich Kunden zur Verfügung gestellter Geräte (7A, 7X, 8A, 8Y, 9A, 9Z) für eine Anordnung des Kerns einer Telekommunikationsanlage, die um Durchschaltebetriebsart unterstützende Einheiten (2, 3, 5) herum aufgebaut ist, die durch ein lokales Netz von zeitlichen Punkt-zu-Punkt-Verbindungen (L) miteinander verbunden sind, wobei diese Einheiten zum Anschließen von Kunden zur Verfügung gestellten Geräten an die Anlage sowie ggf. von Hilfseinrichtungen (A04, A05) und/oder von Steuer- oder Verarbeitungseinrichtungen (5E) dienen, dadurch gekennzeichnet, daß
jede Einheit, die mit Schnittstellen (01 bis 05) zum Anschließen der Einrichtungen, Hilfseinrichtungen oder an sie angeschlossenen Geräte und einer Kommunikationsschaltung (4) ausgestattet ist, welche von einem Mikroprozessor (10) überwacht wird und mit letzterem sowie mit internen zeitlichen Verbindungen (LMA bis LMS), die die Anschlußschnittstellen der Einheit bedienen, und mit den an die Einheit angeschlossenen zeitlichen Punkt-zu-Punkt-Verbindungen verbunden ist, um diese Einrichtungen, Hilfseinrichtungen oder an sie angeschlossenen Geräte mit dem Mikroprozessor und den Einrichtungen, Hilfseinrichtungen oder Geräten, die über andere Einheiten der Durchschaltebetriebsart-Unterstützungsanordnung erreichbar sind, in Kommunikation zu setzen, Mittel zum Formanpassen der Signalisierungsinformationen (012 bis 052) für die Einrichtungen, Hilfseinrichtungen oder an sie angeschlossenen Geräte umfaßt, und zwar wenigstens auf dem Niveau der Anschlußschnittstellen, für die interne Übertragung der Signalisierungsinformationen in einer standardisierten, von der Kommunikationsschaltung der Einheit, über die die Signalisierungsinformationen ausgetauscht werden, vermittelbaren Form, und daß sie Mittel (19, 20, 21, 22) zur Vorverarbeitung der Signalisierungsinformationen für den Mikroprozessor der betreffenden Einheit, die Hilfseinrichtung oder die für ihre Verarbeitung in der Anordnung zuständige Einrichtung umfaßt.

2. System zur Verarbeitung der Signalisierung nach Anspruch 1, dadurch gekennzeichnet, daß die Kommunikationsschaltung (4) jeder Einheit (2, 2A, 2B, 3,4), die die Durchschaltebetriebsart unterstützt, die Übermittlung der gesamten von den an sie angeschlossenen Geräten (7A, 8A, 9A, ..., 7X, 8Y, 9Z), Hilfseinrichtungen (04, 05) oder Einrichtungen oder an diese in Durchschaltebetriebsart von dem oder an den dieser Kommunikationsschaltung in der betreffenden Einheit zugeordneten Mikroprozessor (10) und/oder zu den anderen Durchschaltebetriebsart unterstützenden Einheiten gesendeten Signalisierungsinformation gewährleistet.

3. System zur Verarbeitung der Signalisierung nach Anspruch 2, dadurch gekennzeichnet, daß jede Kommunikationsschaltung (4) einer Einheit (2) Mittel zur oktettweisen Signalisierungsvorverarbeitung aufweist, die einen Automaten zum Senden von Oktetts (19) wenigstens einem Oktetts generierenden Zähler zuordnet, der mit dem Vermittlungsmodul (16) der Schaltung verbunden ist, um auf Veranlassung des dieser Kommunikationsschaltung zugeordneten Mikroprozessors (10) von dem Zähler/den Zählern erzeugte Oktetts an ausgehende zeitliche Kanäle der zeitlichen Multiplexverbindungen (LMA, ..., LMS) zum Anschließen von Geräten (7A, ..., 7X) und/oder Hilfseinrichtungen an die Einheit, die an diese Schaltung angeschlossen sind, zu vermitteln.

4. System zur Verarbeitung der Signalisierung nach Anspruch 2, dadurch gekennzeichnet, daß jede Kommunikationsschaltung (4) einer Einheit (2) Mittel zur oktettweisen Signalisierungsvorverarbeitung aufweist, die einen Automaten zum Verarbeiten isolierter eingehender Oktetts (21) Komparatoren zur Überwachung der von den von den zeitlichen Kanälen der eingehenden zeitlichen Verbindungen (LMAE, ..., LMDE) zum Anschließen von Geräten (7A, ..., 7X) und/oder Hilfseinrichtungen für die Einheit zuordnet, um den der Vermittlungsschaltung in dieser Einheit zugeordneten Mikroprozessor (10) über signifikante Veränderungen von Signalisierungsoktetts in den überwachten eingehenden zeitlichen Kanälen zu informieren.

5. System zur Verarbeitung der Signalisierung nach Anspruch 2, dadurch gekennzeichnet, daß jede Kommunikationsschaltung (4) einer Einheit (2) Mittel zur meldungsweisen Signalisierungsvorverarbeitung aufweist, die einen Automaten (20) zur Verarbeitung ausgehender Signalisierungsmeldungen beinhalten, um auf Anforderung auf ausgehenden zeitlichen Kanälen (S) der zeitlichen Multiplexverbindungen (LMA, ..., LMS) zum Anschließen von Geräten (7A, ..., 7X) und/oder Hilfseinrichtungen vorab in der Einheit gespeicherte Meldungsoktetts unter der Überwachung des der betreffenden Kommunikationsschaltung zugeordneten Mikroprozessors (10) unter Anwendung eines bestimmten Meldungsübertragungsverfahrens senden zu können, das von dem Automaten zur Verarbeitung ausgehender Meldungen berücksichtigt wird.

6. System zur Verarbeitung der Signalisierung nach Anspruch 5, dadurch gekennzeichnet, daß die unter der Wirkung eines Automaten (20) zur Verarbeitung ausgehender Signalisierungsmeldungen gesendeten Meldungsoktetts in einem Speicher (26) gespeichert werden, auf den der Mikroprozessor (10) der den Automaten aufweisenden Einheit für seine Verarbeitungen zugreift.

7. System zur Verarbeitung der Signalisierung nach Anspruch 2, dadurch gekennzeichnet, daß jede Kommunikationsschaltung (4) einer Einheit (2) Mittel zur meldungsweisen Signalisierungsvorverarbeitung aufweist, die einen Automaten (22) zur Verarbeitung eingehender Signalisierungsmeldungen beinhalten, um auf Anforderung und entsprechend einem bestimmten Übertragungsverfahren über bestimmte eingehende zeitliche Kanäle (S) der zeitlichen Multiplexverbindungen (LMA, ..., LMS) zum Anschließen von Geräten (7A, ..., 7X) und/oder Hilfseinrichtungen empfangene Meldungsoktetts zu verarbeiten und diese Meldungen in einem direkt über diesen Automaten und durch den der ihn enthaltenden Kommunikationsschaltung zugeordneten Mikroprozessor (10) zugänglichen Speicher (26) aufzuzeichnen.

8. System zur Verarbeitung der Signalisierung nach Anspruch 2, dadurch gekennzeichnet, daß es Mittel (012) auf dem Niveau der Schnittstellen (01) zum Anschließen von Geräten umfaßt, um zum einen analoge Gerätesignalisierungen aufzufangen und sie in Form von Oktetts auf einem dem Gerät zugeordneten zeitlichen Kanal zu übertragen, der von dem zeitlichen Kanal verschieden ist, der dem Gerät für die Übertragung der anderen von ihm gesendeten Informationen zugeordnet ist, wobei beide Kanäle auf der eingehenden Verknüpfung (LMCE) der zeitlichen Multiplexverbindung (LMC) gewählt sind, die die betreffende Anschlußschnittstelle mit der sie bedienenden Kommunikationsschaltung (4) verbindet, und zum anderen die auf einem zeitlichen Kanal der Verknüpfung (LMCS) in Gegenrichtung der zeitlichen Multiplexverbindung (LMC) ankommenden Signalisierungsoktetts in mit dem bedienten Gerät kompatible analoge Signale umzuwandeln.
